# EUROPÄISCHE PATENTSCHRIFT

(11) **EP 2 427 665 B1**
(45) Veröffentlichungstag und Bekanntmachung des Hinweises auf die Patenterteilung: **12.06.2013**
(21) Anmeldenummer: 10717151.4
(22) Anmeldetag: 05.05.2010
(51) Int. Cl.: F16C 33/12, B22F 7/08, B32B 15/01, C22C 1/04, C22C 9/00, C22C 32/00

(54) **GLEITLAGERMATERIAL**
SLIDING BEARING MATERIAL
MATÉRIAU POUR PALIER LISSE

(30) Priorität: 07.05.2009 DE 102009002894
(43) Veröffentlichungstag der Anmeldung: 14.03.2012
(73) Patentinhaber: Federal-Mogul Wiesbaden GmbH, 65201 Wiesbaden (DE)
(72) Erfinder: SCHMITT, Holger, 64319 Pfungstadt (DE); ENGHOF, Thomas, 65201 Wiesbaden (DE); MEISTER, Daniel, 55246 Mainz-Kostheim (DE)
(74) Vertreter: HOFFMANN EITLE
(86) Internationale Anmeldenummer: PCT/EP2010/056088
(87) Internationale Veröffentlichungsnummer: WO 2010/128076

(56) Entgegenhaltungen:
- DE-B- 1 097 691
- DE-C- 571 213

## Beschreibung

### Technisches Gebiet

Die Erfindung betrifft einen bleifreien Gleitlagerwerkstoff mit einer Matrix auf CuFe2P-Basis. Die Erfindung betrifft ferner einen Gleitlagerverbundwerkstoff mit einer Stahlstützschicht und einer Lagerschicht aus einem solchen CuFe2P-Gleitlagerwerkstoff und ein Gleitelement auf CuFe2P-Basis.

### Stand der Technik

Bleifreie gesinterte Gleitlagerwerkstoffe auf Kupfer-Basis, insbesondere auf Basis einer Bronzematrix, sind bekannt für ihre gute Wärmeleitfähigkeit sowie ihre hohe Verschleiß- und Korrosionsbeständigkeit im Vergleich zu gleichartigen bleihaltigen Werkstoffen. Der Entwicklung solcher Werkstoffe lag der Wunsch zu Grunde, bleihaltige Gleitlagerwerkstoffe zu ersetzten, da Blei als ein die Umwelt belastender Schadstoff eingestuft ist. Blei hat im Gleitlagerwerkstoff die Funktion eines Festschmierstoffes. Für diese Feststoffschmierung muss ein Ersatz gefunden werden. Andernfalls kann beispielsweise ein einphasiger Bronzewerkstoff eine erhöhte Fressneigung unter Mischreibungsbedingungen aufweisen. Unter diesem Gesichtspunkt sind in der Literatur und in der Praxis eine Reihe unterschiedlicher Zusammensetzungen untersucht worden und zur Anwendung gelangt.

So beschreibt z.B. die EP 0 962 541 A1 ein Kupfer-basiertes Gleitmaterial, bei dem Teilchen aus AlN, Al₂O₃, NiB, Fe₂B, SiC, TiC, WC, Si₃N₄, Fe₃P, Fe₂P und/oder Fe₃B in einer Matrix aus gesintertem Kupfer oder einer gesinterten Kupferlegierung dispergiert sind. Zur Erzeugung des Gleitmaterials wird ein Kupfer- oder Kupferlegierungspulver mit z.B. AlN- (Hv: 1,300; Teilchendurchmesser z.B. 0.5 µm) und Fe₃P-Teilchen (Hv: 800; Teilchendurchmesser z.B. 5 µm) gemischt und die Mischung gesintert. In der Mischung und in dem Gleitmaterial werden der Gewichtsanteil und der durchschnittliche Teilchendurchmesser der Teilchen mit einer mittleren Härte (Hv) von 500-1,000 (d.h. Fe₃P, Fe₂P und/oder Fe₃B) so gewählt, dass sie größer sind als der Gewichtsanteil und der durchschnittliche Teilchendurchmesser der Teilchen mit hoher Härte (Hv) von 1,100 oder mehr (d.h. AlN, Al₂O₃, NiB, Fe₂B, SiC, TiC, WC und/oder Si₃N₄).

Ein anderes Gleitmaterial auf Kupferbasis ist in der WO 2008/140100 beschrieben. Es enthält 1,0-15 Gew.-% Sn. 0,5-15 Gew.-% Bi und 0,05-5 Gew.-% Ag, wobei Ag und Bi in einem eutektischen Zustand vorliegen. Falls nötig kann das Gleitmaterial 1-10 Gew.-% Fe₃P, Fe₂P, FeB, NiB und/oder AlN-Teilchen mit einem durchschnittlichen Korndurchmesser von 1,5-70 µm enthalten.

Im Gegensatz dazu wurde CuFe2P bisher hauptsächlich in der Elektronikindustrie (z.B. als Kontaktmaterial) und als Wärmetauschermaterial verwendet. Die US 2009/0010797 beschreibt z.B. eine Platte für elektronische Bauteile aus einer Cu-Fe-P-Legierung, die 0.01-3 Gew.-% Fe und 0.01-0.3 Gew.-% P enthält und die eine spezielle Orientierung aufweist. CuFe2P wird als geeignete Kupferlegierung genannt. Die US 2006/0091792 beschreibt Sputter-Targets für Flachbildschirme aus speziellen Cu-Fe-P-Legierungen.

Die DE 1 097 691 beschreibt die Verwendung von aushärtbaren und verformungsfähigen Legierungen, die aus 0,05 bis 3% Phosphor, 0,2 bis 18% Mangan und/oder Eisen, Kobalt, Nickel, Rest Kupfer bestehen und die gegebenenfalls auch noch Blei in Mengen von 0,1 bis 3% enthalten können, als Werkstoffe von z.B. Gleitlagern, Schwinglagern, Kupplungs- und Bremslamellen.

Der vorliegenden Erfindung liegt die Aufgabe zugrunde, ein Gleitlagermaterial bereitzustellen, dass die Vorteile von Werkstoffen auf Kupfer-Basis aufweist und bei dem auf den Einsatz von Blei verzichtet werden kann. Das Gleitlagermaterial sollte eine gute Bearbeitbarkeit aufweisen und ein Fressen des Lagers vermeiden. Das Gleitlagermaterial sollte sich ferner gut herstellen und auf übliche Stützschichten aufbringen lassen.

### Zusammenfassung der Erfindung

Überraschend wurde nun herausgefunden, dass die Verwendung von CuFe2P zu Gleitlagern mit hoher thermischer Leitfähigkeit und guten mechanischen Eigenschaften führt.

Daher betrifft die vorliegende Erfindung die Verwendung von CuFe2P für Gleitlager bzw. als Gleitlagerwerkstoff. Ferner betrifft die Erfindung einen Gleitlagerverbundwerkstoff und ein Gleitlager die diesen Gleitlagerwerkstoff umfassen.

### Kurze Beschreibung der Zeichnungen

- Fig. 1: zeigt eine Lagerhalbschale mit dem erfindungsgemäßen Gleitlagerwerkstoff.
- Fig. 2: zeigt einen vergrößerten Ausschnitt aus der Lagerhalbschale von Fig. 1.

### Detaillierte Beschreibung der Erfindung

CuFe2P (CW107C; C19400) ist eine Kupferlegierung die nach der DIN EN Spezifikation 2,1-2,6 Gew.-% Fe, 0,05-0,2 Gew.-% Zn, 0,015-0,15 Gew.-% P, bis zu 0,03 Gew.-% Pb und bis zu 0,2 Gew.-% sonstige Zugaben enthält. Eine für die Zwecke der vorliegenden Erfindung geeignete Legierung ist unter der Bezeichnung Wieland-K65^{®} erhältlich und hat folgende Zusammensetzung (Richtwerte):

| | Gew.-% |
|---|---|
| Fe | 2,4 |
| Zn | 0,12 |
| P | 0,03 |
| Cu | Rest |

Die spezifische Wärmekapazität von CuFe2P beträgt (siehe Informationen zu CuFe2P des Deutschen Kupferinstituts):

| Temperatur [°C] | spezifische Wärmekapazität [J/(g·K)] |
|---|---|
| 20 | 0,38 |
| 100 | 0,38 |
| 200 | 0,39 |
| 300 | 0,41 |

Erfindungsgemäß wird CuFe2P als Gleitlagerwerkstoff verwendet.

Bei der Herstellung des erfindungsgemäßen Gleitlagerwerkstoffs wird CuFe2P bevorzugt gesintert oder gegossen. Das Sintern erfolgt bevorzugt bei einer Temperatur von 950-980°C.

Während der Herstellung des erfindungsgemäßen Gleitlagerwerkstoffs aus CuFe2P durch Sintern und/oder Gießen entstehen harte Fe₂P-Partikel, die in der Matrix vorliegen. Im Gegensatz zur Lehre der EP 0 962 541 A1 müssen diese nicht durch spezielle Schritte eingebracht werden. Diese Hartteilchen führen zu einer hohen Abriebbeständigkeit. Sie dienen ferner als Spanbrecher, wodurch sich die Bearbeitbarkeit des Werkstoffes, beispielsweise beim Bohren des Lagers, verbessern lässt. Die vorhandenen Fe₂P-Partikel führen zu guten Poliereigenschaften gegenüber dem Gegenläufer und verhindern dadurch das Fressen des Gleitlagers und den möglichen Übertrag von Lagermaterial auf den Gegenläufer und die damit verbundene Anhaftung des Lagers am Gegenläufer.

Ein weiterer Vorteil des erfindungsgemäßen Gleitlagerwerkstoffs liegt in der hohen Wärmeleitfähigkeit, die z.B. doppelt so hoch ist wie bei gegossenem CuNi2Si, das häufig in Gleitlagern eingesetzt wird. Im Vergleich zu üblichen Sinterwerkstoffen wie z.B. CuSn8Ni, CuSn10Bi3.5 und CuPb23Sn3 liegt die Wärmeleitfähigkeit sogar bis um den Faktor 5 höher. Dies führt zu einer guten Abfuhr der im Lager entstehenden Reibungswärme, und so zu einer geringeren Wahrscheinlichkeit der Überhitzung und einer daraus folgenden Schädigung des Lagermaterials unter Mischreibungsbedingungen. Die gute Abfuhr der im Lager entstehenden Wärme vermeidet ferner thermische Einflüsse auf das im Lager befindliche Öl, die zu einer Änderung der Viskosität und des Schmierverhaltens führen können.

Durch das Zusammenspiel der hohen Wärmeleitfähigkeit und der Polierwirkung durch die Fe₂P-Hartteilchen kann das Fressen des Lagers besonders effektiv verhindert werden, da beide Effekte die Adhäsion des Gleitlagerwerkstoffs am Gegenläufer verringern. Dieser Effekt kann in einer bevorzugten Ausführungsform der Erfindung durch das Einbringen weiterer Hartteilchen noch verstärkt werden.

Geeignete Hartteilchen schließen z.B. Partikel aus AlN, Al₂O₃, NiB, Fe₂B, SiC, TiC, WC, W₂C, Mo₂C, c-BN, MoSi₂, Si₃N₄, Fe₃P, Fe₂P, Fe₃B, TiO₂ und ZrO₂ ein.

In einer weiteren bevorzugten Ausführungsform enthält der erfindungsgemäße Gleitlagerwerkstoff ferner noch ein Festschmiermittel wie z.B. h-BN oder Graphit. Der Zusatz eines solchen Festschmiermittels verringert den Reibungskoeffizienten und dadurch die Wärmeentwicklung im Lager. Wenn h-BN als Festschmiermittel eingesetzt wird, können z.B. die in der DE 10 2007 033 902 B3, deren Offenbarung durch die Bezugnahme aufgenommen wird, beschriebenen Partikel verwendet werden.

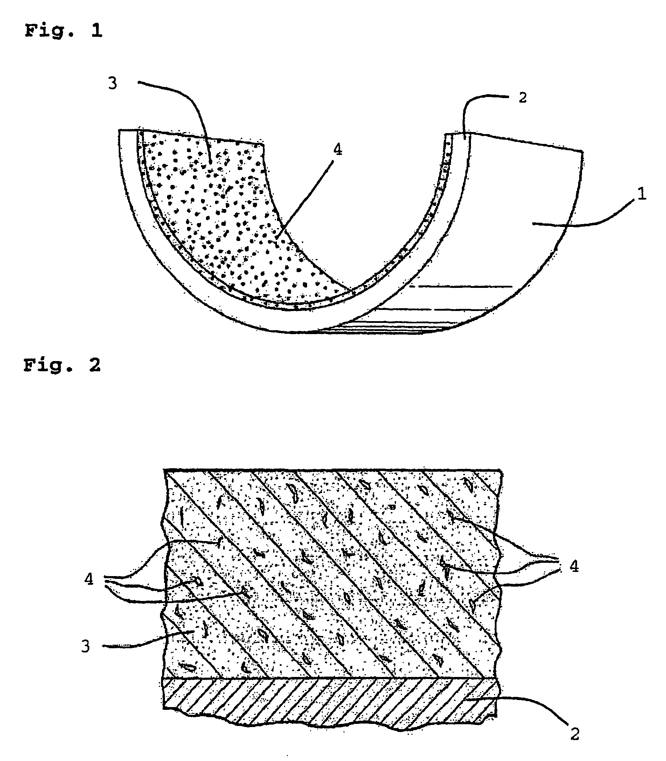

Die Erfindung betrifft ferner einen Gleitlagerverbundwerkstoff. Figuren 1 und 2 zeigen eine Lagerhalbschale (1) aus dem erfindungsgemäßen Gleitlagerverbundwerkstoff, der eine Stützschicht (2), bevorzugt aus Stahl, und den oben beschriebenen Gleitlagerwerkstoff (3) auf CuFe2P-Basis mit den darin gebildeten Fe₂P-Partikeln (4) als Lagermetallschicht umfasst. Die Dicke der Lagermetallschicht beträgt dabei bevorzugt 0,1-1,0 mm, besonders bevorzugt 0,3-0,5 mm.

Bevorzugt ist auf der Lagermetallschicht aus dem vorgenannten Gleitlagerwerkstoff eine Gleitschicht mit einer Dicke von 7-20 µm angeordnet. Besonders bevorzugt ist auf der Gleitschicht noch eine Einlaufschicht mit einer Dicke von 1-10 µm angeordnet. Solche Gleitschichten und Einlaufschichten sind dem Fachmann bekannt und werden üblicherweise in Gleitlagern eingesetzt.

In einem weiteren Aspekt betrifft die vorliegende Erfindung noch ein Gleitlager umfassend diesen Gleitlagerverbundwerkstoff.

### Beispiele

### Beispiel 1

Zur Herstellung des Gleitlagerwerkstoffs wird ein CuFe2P-Pulver auf eine Stahlstützschicht aufgebracht und in einem ersten Schritt bei 950-980°C gesintert. Danach wird das Material durch einen Walzschritt kompaktiert, so dass die Porosität einen Wert unter 0,5% annimmt. Anschließend wird zur Ausheilung der Sinterschicht nochmals bei 950-980°C gesintert und mittels eines zweiten Walzschritts die Schichthärte auf 90-150 HBW 1/5/30 und die Porosität auf einen Wert unter 0,3 % eingestellt.

### Beispiel 2

Zur Herstellung des Gleitlagerwerkstoffs wird CuFe2P über seinen Schmelzpunkt von 1089°C erhitzt und aufgeschmolzen. Anschließend wird die Schmelze mit einer Temperatur von 1150-1250°C auf eine Stahlstützschicht aufgegossen.

Danach kann die Oberfläche der Schicht auf eine dem Fachmann bekannte Weise durch mechanisches Bearbeiten geglättet und ggf. die gewünschte Härte mittels eines oder mehrerer Walzschritte(s) eingestellt werden.

## Patentansprüche

1. Verwendung von CuFe2P in einem Gleitlager, **dadurch gekennzeichnet, daß** CuFe2P eine Kupferlegierung ist, die 2,1-2,6 Gew.-% Fe, 0,05-0,2 Gew.-% Zn, 0,015-0,15 Gew.-% P, bis zu 0,03 Gew.-% Pb und bis zu 0,2 Gew.-% sonstige Zugaben enthält.

2. Verwendung von CuFe2P als Gleitlagerwerkstoff, **dadurch gekennzeichnet, daß** CuFe2P eine Kupferlegierung ist, die 2,1-2,6 Gew.-% Fe, 0,05-0,2 Gew.-% Zn, 0,015-0,15 Gew.-% P, bis zu 0,03 Gew.-% Pb und bis zu 0,2 Gew.-% sonstige Zugaben enthält.

3. Verwendung nach einem der Ansprüche 1 und 2, **dadurch gekennzeichnet, daß** CuFe2P als Gusswerkstoff eingesetzt wird.

4. Verwendung nach einem der Ansprüche 1 bis 3, **dadurch gekennzeichnet, daß** CuFe2P als Sinterwerkstoff eingesetzt wird.

5. Verwendung nach Anspruch 4, **dadurch gekennzeichnet, daß** CuFe2P bei einer Temperatur 950-980°C gesintert wird.

6. Verwendung nach einem der vorangehenden Ansprüche, **dadurch gekennzeichnet, daß** in den Werkstoff auf CuFe2P-Basis Hartteilchen eingebracht sind.

7. Verwendung nach Anspruch 6, **dadurch gekennzeichnet, daß** Partikel aus AlN, Al₂O₃, NiB, Fe₂B, SiC, TiC, WC, W₂C, Mo₂C, c-BN, MoSi₂, Si₃N₄, Fe₃P, Fe₂P, Fe₃B, TiO₂ und ZrO₂ eingebracht sind.

8. Verwendung nach einem der vorangehenden Ansprüche, **dadurch gekennzeichnet, daß** in den Werkstoff ein Festschmierstoff eingebracht ist.

9. Verwendung nach Anspruch 8, **dadurch gekennzeichnet, daß** h-BN oder Graphit als Festschmierstoff verwendet wird.

10. Gleitlagerverbundwerkstoff (1) umfassend eine Stützschicht (2), bevorzugt aus Stahl, und eine Lagermetallschicht (3) aus dem Gleitlagerwerkstoff nach einem der Ansprüche 2 bis 9.

11. Gleitelement oder Gleitlager umfassend den Gleitlagerverbundwerkstoff nach Anspruch 10.

## Claims

1. Use of CuFe2P in a sliding bearing, **characterised in that** CuFe2P is a copper alloy which contains 2.1-2.6 wt.% of Fe, 0.05-0.2 wt.% of Zn, 0.015-0.15 wt.% of P, up to 0.03 wt.% of Pb and up to 0.2 wt.% of other additions.

2. Use of CuFe2P as a sliding bearing material, **characterised in that** CuFe2P is a copper alloy which contains 2.1-2.6 wt.% of Fe, 0.05-0.2 wt.% of Zn, 0.015-0.15 wt.% of P, up to 0.03 wt.% of Pb and up to 0.2 wt.% of other additions.

3. Use according to one of claims 1 and 2, **characterised in that** CuFe2P is used as cast material.

4. Use according to one of claims 1 to 3, **characterised in that** CuFe2P is used as sintered material.

5. Use according to claim 4, **characterised in that** CuFe2P is sintered at a temperature of 950-980°C.

6. Use according to one of the preceding claims, **characterised in that** hard particles are introduced into the material based on CuFe2P.

7. Use according to claim 6, **characterised in that** particles of AlN, Al₂O₃, NiB, Fe₂B, SiC, TiC, WC, W₂C, Mo₂C, c-BN, MoSi₂, Si₃N₄, Fe₃P, Fe₂P, Fe₃B, TiO₂ and ZrO₂ are introduced.

8. Use according to one of the preceding claims, **characterised in that** a solid lubricant is introduced into the material.

9. Use according to claim 8, **characterised in that** h-BN or graphite is used as the solid lubricant.

10. Sliding bearing composite material (1) comprising a supporting layer (2), preferably made from steel, and a bearing metal layer (3) made from the sliding bearing material according to one of claims 2 to 9.

11. Sliding element or sliding bearing comprising the sliding bearing composite material according to claim 10.

## Revendications

1. Utilisation du CuFe2P dans un palier lisse, **caractérisée en ce que** CuFe2P est un alliage de cuivre, comprenant 2,1 à 2,6 % en poids de Fe, 0,05 à 0,2 % en poids de Zn, 0,015 à 0,15 % en poids de P, jusqu'à 0,03 % en poids de Pb et jusqu'à 0,2 % en poids d'autres additions.

2. Utilisation du CuFe2P comme matériau pour palier lisse, **caractérisée en ce que** CuFe2P est un alliage de cuivre, comprenant 2,1 à 2,6 % en poids de Fe, 0,05 à 0,2 % en poids de Zn, 0,015 à 0,15 % en poids de P, jusqu'à 0,03 % en poids de Pb et jusqu'à 0,2 % en poids d'autres additions.

3. Utilisation selon l'une des revendications 1 et 2, **caractérisée en ce que** CuFe2P est mis en oeuvre à titre de matériau de coulée.

4. Utilisation selon l'une des revendications 1 à 3, **caractérisée en ce que** CuFe2P est mis en oeuvre à titre de matériau de frittage.

5. Utilisation selon la revendication 4, **caractérisée en ce que** CuFe2P est fritté à une température de 950 à 980 °C.

6. Utilisation selon l'une des revendications précédentes, **caractérisée en ce que** des particules dures sont incorporées dans le matériau à base de CuFe2P.

7. Utilisation selon la revendication 6, **caractérisée en ce que** des particules de AlN, Al₂O₃, NiB, Fe₂B, SiC, TiC, WC, W₂C, Mo₂C, c-BN, MoSi₂, Si₃N₄, Fe₃P, Fe₂P, Fe₃B, TiO₂ et ZrO₂ sont incorporées.

8. Utilisation selon l'une des revendications précédentes, **caractérisée en ce qu'**un lubrifiant solide est incorporé au matériau.

9. Utilisation selon la revendication 8, **caractérisée en ce que** l'on utilise h-BN ou du graphite comme lubrifiant solide.

10. Matériau composite pour palier lisse (1), comprenant une couche support (2), de préférence en acier, et une couche en métal pour palier (3) constituée du matériau pour palier lisse selon l'une des revendications 2 à 9.

11. Elément lisse ou palier lisse comprenant le matériau composite pour palier lisse selon la revendication 10.
